(19) Europäisches Patentamt / European Patent Office / Office européen des brevets

(11) **EP 1 928 167 A1**

(12) **EUROPÄISCHE PATENTANMELDUNG**

(43) Veröffentlichungstag:
**04.06.2008 Patentblatt 2008/23**

(51) Int Cl.:
*H04N 5/235* (2006.01)   *G01J 1/16* (2006.01)
*G01J 1/42* (2006.01)   *G01J 1/44* (2006.01)

(21) Anmeldenummer: **07023117.0**

(22) Anmeldetag: **29.11.2007**

(84) Benannte Vertragsstaaten:
**AT BE BG CH CY CZ DE DK EE ES FI FR GB GR HU IE IS IT LI LT LU LV MC MT NL PL PT RO SE SI SK TR**
Benannte Erstreckungsstaaten:
**AL BA HR MK RS**

(30) Priorität: **02.12.2006 DE 102006057726**

(71) Anmelder: **Jena-Optronik GmbH**
**07745 Jena (DE)**

(72) Erfinder:
• **Fritsch, Holger,**
**07749 Jena (DE)**
• **Voss, Burkart, Dr.**
**07778 Dorndorf-Steudnitz (DE)**

(74) Vertreter: **Freitag, Joachim et al**
**Patentanwälte Oehmke & Kollegen**
**Neugasse 13**
**D-07743 Jena (DE)**

(54) **Verfahren zur Messung elektromagnetischer Strahlung in Instrumenten der Luft- und Raumfahrt**

(57)    Die Erfindung betrifft ein Verfahren zur Messung elektromagnetischer Strahlung in Instrumenten der Luft- und Raumfahrt, insbesondere zur Beobachtung der Erde oder anderer Himmelskörper.

Die Aufgabe, eine neue Möglichkeit zur Messung elektromagnetischer Strahlung zu finden, die sowohl die Erfassung hoher zu erwartender Signalpegel ohne Sättigung als auch niedriger Signalpegel mit ausreichend hohem Signal-zu-Rausch-Verhältnis (SNR) gestattet, ohne Verstärkungsumschaltungen zu erfordern, wird erfindungsgemäß gelöst, indem Parameter der Signalverarbeitungsketten (1) der Detektoren (11) gezielt so eingestellt werden, dass mindestens ein Detektor (11a) für einen Dynamikbereich (25) des maximal zu erwartenden Signalpegels ($S_{MAX}$) der elektromagnetischen Strahlung (2) und mindestens ein weiterer Detektor (11 b) auf einen eingeschränkten Dynamikbereich (26) für kleine und mittlere Signalpegel eingerichtet sind, um ein höheres Signal-zu-Rausch-Verhältnis (SNR) zu erhalten.

**Fig. 4**

EP 1 928 167 A1

**Beschreibung**

Die Erfindung betrifft ein Verfahren zur Messung elektromagnetischer Strahlung in Instrumenten der Luft- und Raumfahrt, insbesondere zur Beobachtung der Erde oder anderer Himmelskörper.

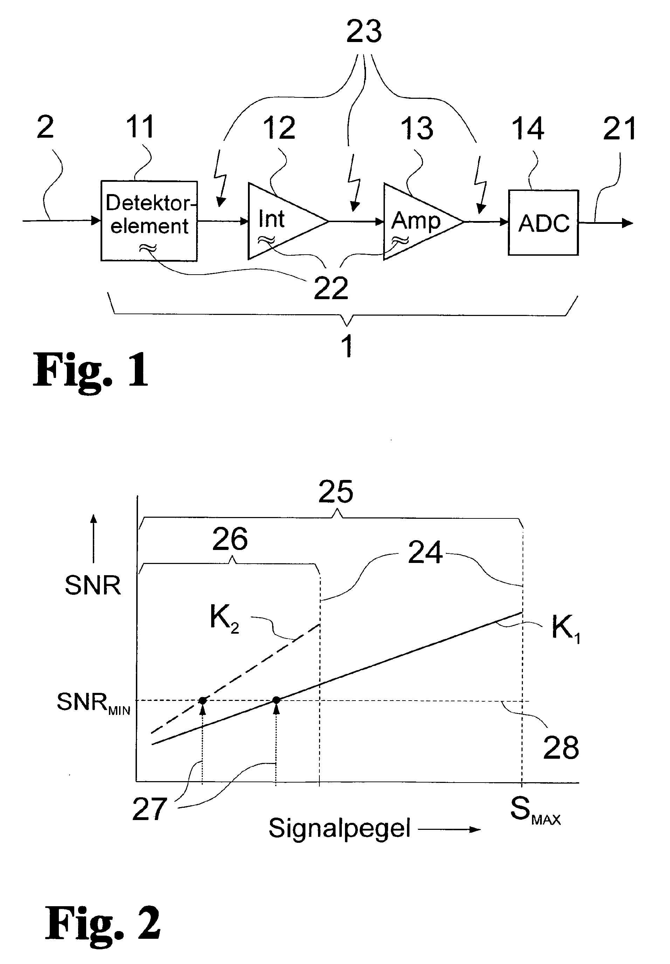

Instrumente zur Messung elektromagnetischer Strahlung weisen für jedes Sensorelement einen so genannten Signalkanal auf, der sich in der Regel - wie aus Fig. 1 ersichtlich - als eine Signalverarbeitungskette 1 aus einem Detektor 11, einem Integrator 12, einem Verstärker 13 und einem Analog-Digital-Wandler (ADC) 14 darstellen lässt. Durch den auftreffenden Fluss elektromagnetischer Strahlung 2 wird im Detektor 11 ein analoges elektrisches Signal erzeugt, das aufsummiert und verstärkt und schließlich in ein digitales Ausgangssignal gewandelt wird.

Jedes Bauelement der Signalverarbeitungskette 1 kennt einen bestimmten Signalpegel, ab dem es in Sättigung geht. Da oberhalb dieses maximalen Signalpegels das Signal nicht mehr auswertbar ist, stellt dieser eine Sättigungsgrenze 24 (vgl. Fig. 2) dar. Bei der Auslegung der Signalverarbeitungskette 1 wird in der Regel darauf Wert gelegt, dass an keinem der vorgenannten Bauelemente der spezifische Sättigungssignalpegel erreicht wird. Im Umkehrschluss definiert die Wahl bestimmter Bauelemente die Sättigungsgrenze 24 des mit dem Instrument auswertbaren Flusses an elektromagnetischer Strahlung 2.

Hat die einfallende Strahlung 2 einen stark variierenden Signalpegel wird die Auswertung zusätzlich dadurch erschwert, dass dem Signal am Eingang des ADC 14 ein Rauschanteil überlagert ist. Das Rauschen wird durch interne elektronische Rauschprozesse 22 aller vorgeschalteten Bauelemente der Signalverarbeitungskette 1 sowie durch externes Rauschen 23 (d.h. äußere Störsignale) verursacht. Alle Rauschterme, die vor dem Verstärker 13 auftreten, sind besonders kritisch, da sie mit verstärkt werden.

Als Maß für die Güte der Signale ist das Signal-zu-Rausch-Verhältnis (SNR) definiert.

$$SNR = \frac{Nutzsignal}{Rauschanteil} = \frac{Gesamtsignal - Rauschanteil}{Rauschanteil}$$

Spezielle Anwendungen eines Messinstruments stellen unterschiedliche Anforderungen an die zu entwerfende Signalverarbeitungskette 1. Ausgehend vom Anwendungsfall wird ein Bereich des zu erfassenden Signalpegels - Dynamikbereich 25 - definiert, den das Instrument auswerten können muss. Erfordert die vorgesehene Anwendung die Auswertung eines großen maximalen Signalpegels $S_{MAX}$, so verschlechtert sich damit automatisch die Auswertbarkeit von kleinen Signalen, da dort das SNR zu gering ist.

Für bestimmte Anwendung wird deshalb zusätzlich zur Sättigungsgrenze 24 des Dynamikbereiches 25 (maximal aufnehmbares Signal $S_{MAX}$) häufig ein bezüglich der Rauschprozesse 22 und 23 minimaler Signalpegel 27 definiert, für den das SNR noch eine klare Unterscheidung des Nutzsignals vom Rauschanteil erlaubt. Diese Grenze wird als $SNR_{MIN}$ angegeben und stellt den Schwellwert 28 für das SNR (abszissenparallele gestrichelte Linie in Fig. 2) dar. In Fig. 2 sind in einem SNR-Signal-Diagramm zwei Kurven $K_1$ und $K_2$ für zwei verschieden dimensionierte Signalverarbeitungsketten 1 mit unterschiedlichen Verstärkungsfaktoren dargestellt. Mit Verstärkungsfaktor sei im Folgenden der Gesamteffekt von der Strahlungsumwandlung im Detektor 11 bis zum Ausgang des Verstärker 13 bezeichnet.

Üblicherweise wird das mindestens erforderliche SNR über dem Signalpegel - wie in Fig. 2 für zwei unterschiedliche Signalverarbeitungsketten 1 gezeigt- mit Hilfe nur eines Wertes $SNR_{MIN}$ definiert. Es zeigt sich, dass im Falle der durchgezogenen Kurve $K_1$ zwar der gesamte Dynamikbereich beobachtbar ist, die Signalqualität im unteren Bereich jedoch nicht den vorgegebenen Mindestanforderungen an das SNR genügt. Erhöht man den Verstärkungsfaktor innerhalb der Signalverarbeitungskette 1, entsteht die gestrichelte Kurve $K_2$, bei der im unteren Signalbereich der geforderte minimale Signalpegel 27 detektiert werden kann, indem der SNR-Schwellwert 28 in diesem Punkt erreicht wird. Jedoch läuft die Kurve $K_2$ ab mittleren Signalpegeln bereits in Sättigung (Sättigungsgrenze 24) und kann den oberen Teil des geforderten Dynamikbereiches 25 nicht abdecken.

Um dieses grundsätzliche Problem zu lösen, sind im Stand der Technik gegenwärtig zwei Ansätze bekannt:

1. Einstellung der Verstärkung der Signalverarbeitungskette mittels Schätzung auf Basis von Vorkenntnissen über das zu erwartende Signal.
Ein solches Verfahren ist z.B. im Instrument IASI des europäischen Wettersatelliten METOP implementiert. Hier wird die Integrationszeit des gesamten Ausleseschrittes dahingehend unterteilt, dass in einem ersten, sehr kurzen Integrationsintervall der Signalpegel der einfallenden Strahlung nur grob ermittelt wird und dann mit derselben Signalverarbeitungskette eine zweite längere Integration mit angepasstem Verstärkungsfaktor durchgeführt wird. Dem Verlust an Integrationszeit steht ein überproportionaler Gewinn durch eine Anpassung des Verstärkungsfaktors gegenüber. Nachteilig ist die Realisierung der unterschiedlichen Verstärkungsfaktoren durch elektronische Schalter, die ihrerseits zusätzliches Rauschen erzeugen.

2. TDI-Verfahren (TDI - Time Delay Integration).

Das so genannte TDI-Verfahren kommt ohne Vorauslesung und nachgeschaltete Verstärkungsanpassungen aus. Das TDI-Verfahren wird z.B. von E.L. Dereniak und G.D. Boreman: Serial Scan with Time Delay and Integration, in: Infrared Detector Systems, John Wiley & Sons, 1996, S. 491-493 (ISBN 0-471-12209-2) ausführlich beschrieben. Dabei wird das zu beobachtende Objekt mehrmals hintereinander aufgenommen und die Messwerte der Einzelmessungen werden gemittelt. In scannenden Systemen wird diese Mehrfachabtastung über mehrere (i.d.R. zeilenförmig angeordnete) Sensorelemente realisiert und zeitlich dicht aufeinanderfolgend ein und dasselbe Objekt aufgenommen (übliches Prinzip von satellitengestützten Bildaufnahmesystemen). Die Verstärkungsfaktoren sind dabei für alle Sensorelemente gleich und an den maximal abzudeckenden Signalpegel angepasst. Zufällige Unterschiede der Empfindlichkeiten der Sensorelemente werden meist elektronisch nachkorrigiert. Das SNR verbessert sich bei Anwendung des TDI-Verfahrens allein aufgrund der Mittelung der Pixelsignale der einheitlich empfindlichen Sensorelemente, ermöglicht jedoch keine Anpassung an variierende Signalpegel.

Um einen großen Dynamikbereich abdecken zu können, ist bei den obigen bekannten Verfahren der Verstärkungsfaktor der Sensoren in Abhängigkeit vom maximal zu erfassenden Eingangssignal zu wählen. Dazu muss er jedoch bei schwankenden Signalpegeln auf das maximal zu erwartende Signal eingestellt werden, wodurch das SNR im mittleren und unteren Teil des Dynamikbereiches ist zu gering (siehe zur Veranschaulichung Kurve $K_1$ in Fig. 2). Soll das SNR für kleine Signalpegel verbessert werden, muss - wie oben beschrieben - entweder die Empfindlichkeit des Detektors oder die Verstärkung der Signalverarbeitungskette umgeschaltet oder ein TDI-Verfahren eingesetzt werden.

Der Erfindung liegt die Aufgabe zugrunde, eine neue Möglichkeit zur Messung elektromagnetischer Strahlung in Instrumenten der Luft- und Raumfahrt zur Beobachtung der Erde oder anderer Himmelskörper zu finden, die sowohl die Erfassung hoher zu erwartender Signalpegel ohne Sättigung als auch niedriger Signalpegel mit ausreichend hohem Signal-zu-Rausch-Verhältnis (SNR) gestattet, ohne dass Umschaltungen der Verstärkung erforderlich sind.

Erfindungsgemäß wird die Aufgabe bei einem Verfahren zur Messung elektromagnetischer Strahlung in Instrumenten der Luft- und Raumfahrt zur Beobachtung der Erde oder anderer Himmelskörper mit mehreren Detektoren, wobei jeder Detektor mit Integrator, Verstärker und Analog-Digital-Wandler (ADC) eine Signalverarbeitungskette bildet, dadurch gelöst, dass Parameter der Signalverarbeitungsketten der Detektoren gezielt so eingestellt werden, dass mindestens ein Detektor auf einen Dynamikbereich für einen maximal zu erwartenden Signalpegel der elektromagnetischen Strahlung eingestellt wird und mindestens ein weiterer Detektor auf einen eingeschränkten Dynamikbereich für kleine und mittlere Signalpegel eingestellt wird, um in diesem eingeschränkten Dynamikbereich ein höheres Signal-zu-Rausch-Verhältnis (SNR) zu erhalten.

Vorteilhaft werden für die Messung ausschließlich Messwerte von Detektoren zugelassen, in deren Signalverarbeitungskette eine Parameterkombination eingestellt war, mit der der aktuelle Signalpegel der einfallenden Strahlung unterhalb einer Sättigungsgrenze des eingestellten Dynamikbereichs der Signalverarbeitungskette aufgenommen wurde, und Detektoren, in deren Signalverarbeitungskette die Sättigungsgrenze überschritten wurde, von der Messung ausgeschlossen werden.

Vorzugsweise wird von mehreren für die Messung zugelassenen Detektoren dasjenige Signal verwendet, in dessen Signalverarbeitungskette eine Parameterkombination eingestellt ist, bei der das höchste SNR erzielt wurde.

Von mehreren für die Messung zugelassenen Detektoren wird zweckmäßig dasjenige Signal ausgewählt, in dessen Signalverarbeitungskette eine Parameterkombination eingestellt ist, bei der ein gefordertes SNR ($SNR_{MIN}$) mittels einer möglichst kurzen Integrationszeit überschritten wurde, um bei einer Objektabbildung eine verbesserte Modulationsübertragungsfunktion (MTF) zu erreichen.

Die den Detektoren in den Signalverarbeitungsketten zugeordneten Parameterkombinationen werden für die Anwendung vorteilhaft dadurch gezielt eingestellt, dass sie passend gewählt, aber fest installiert werden. Weiterhin ist es zweckmäßig, dass von den den Detektoren in den Signalverarbeitungsketten zugeordneten Parameterkombinationen mindestens einer der Parameter wenigstens einer Signalverarbeitungskette dynamisch eingestellt wird.

In einer vorteilhaften Ausführung werden die für die Messung zugelassenen Detektoren in einem TDI-Mode betrieben und mittels einer gewichteten Summenbildung zu einem Messsignal zusammengefasst, wobei die Gewichtung auf Basis der in den Signalverarbeitungsketten eingestellten Parameter erfolgt.

Dabei können die den Detektoren in den Signalverarbeitungsketten zugeordneten Parameterkombinationen für die Anwendung wiederum frei gewählt, aber fest eingestellt oder von den Parameterkombinationen mindestens einer der Parameter wenigstens einer Signalverarbeitungskette dynamisch eingestellt werden.

Vorteilhaft können auch einzelne Detektoren mit fest eingestellten Parametern der Signalverarbeitungsketten und andere Detektoren mit dynamisch eingestellten Parametern betrieben werden.

Für die Einstellung unterschiedlicher Parameter ist es zweckmäßig, dass mindestens einer der Detektoren sich in seinen Abmessungen von den restlichen Detektoren unterscheidet.

In einer weiteren Ausführung der Erfindung ist es vorteilhaft, dass die Detektoren in einem Subpixelabtastregime betrieben werden, wobei durch Verschiebungen um Bruchteile des mittleren Pixelabstandes eine Auflösungserhöhung erreicht wird.

Ferner besteht die Möglichkeit, zur Einstellung unterschiedlicher Signalkettenparameter den unterschiedlichen Detektoren verschiedene Filterelemente vorzuordnen.

Für die Anwendung eines TDI-Modes wird die gewichtete Summenbildung vorzugsweise implementiert in analoger oder digitaler Hardware ausgeführt. Es besteht aber auch die Möglichkeit, die gewichtete Summenbildung in Software implementiert auszuführen.

Für besonders anspruchsvolle Anwendungen ist es möglich, dass bei einem nicht benötigten hohen SNR oberhalb der SNR-Schwelle in der zugehörigen Signalverarbeitungskette die ursprüngliche Integrationszeit zu einer verkürzten Integrationszeit, für die das SNR noch oberhalb der SNR-Schwelle liegt, verringert wird, um dadurch bei der Auslesung des nächsten zugehörigen Detektors eine Steigerung der MTF der Objektabbildung zu erreichen.

Mit der erfindungsgemäßen Lösung ist es möglich, eine Messung elektromagnetischer Strahlung in Instrumenten der Luft- und Raumfahrt zur Beobachtung der Erde oder anderer Himmelskörpern realisieren, die sowohl die Erfassung hoher Signalpegel ohne Sättigung als auch niedriger Signalpegel mit ausreichend hohem Signal-zu-Rausch-Verhältnis (SNR) gestattet, ohne dass Umschaltungen der Verstärkung erforderlich sind.

Die Erfindung soll nachstehend anhand von Ausführungsbeispielen näher erläutert werden. Die Zeichnungen zeigen:

Fig. 1: eine Prinzipansicht einer Signalverarbeitungskette 1 von einem Detektor 11 bis zu einem A/D-Wandler (ADC),

Fig. 2: ein schematische Darstellung des SNR über dem Signalpegel der einfallenden Strahlung für zwei Signalverarbeitungsketten mit unterschiedlicher Verstärkung,

Fig. 3: Beispiele möglicher Anordnungen von Detektoren 11 bezüglich der Bewegungsrichtung des abtastenden Instrumentes und Darstellung der jeweiligen Abtastrichtung (durchgezogener Pfeil) und möglicher TDI-Richtung (gestrichelter Pfeil),

Fig. 4: eine Darstellung eines Signal-Rausch-Verhaltens gemäß dem erfindungsgemäßen Verfahren mit unterschiedlich eingestellten Signalverarbeitungsketten von zugeordneten Detektoren 11, wodurch die Auswertbarkeit von großen Signalpegeln im geforderten hohen Dynamikbereich 25 möglich ist und gleichzeitig für kleine Signalpegel in einem eingeschränkten Dynamikbereich 26 höhere SNR erzielt werden,

Fig. 5: eine Möglichkeit zur Einstellung unterschiedlicher Signalkettenparameter durch verschieden große aktive Flächen der Detektoren 11a und 11b,

Fig. 6: drei verschiedene Möglichkeiten mit jeweils zwei Gruppen von unterschiedlich eingestellten Signalkettenparametern das erfindungsgemäße Verfahren mit einem herkömmlichem Subpixelabtastverfahren oder mit dem klassische TDI-Verfahren zu kombinieren;

Fig. 7: zwei schematische Darstellungen einer Abtastung eines Zielobjekts 3 bei relativer Bewegung des Detektors 11 mit a) langer Integrationszeit zur Aufsummierung der größtmöglichen Strahlungsenergie und b) mit verkürzter Integrationszeit zur Verbesserung der MTF, falls ein ausreichend hohes SNR vorhanden ist;

Fig. 8: eine Signalkettenparameterkurve, zusammengesetzt aus Signalen von Detektoren 11 mit unterschiedlich eingestellten Signalkettenparametern, für eine Kombination der Erfindung mit einem TDI-Verfahren nach Ausführung 3);

Fig. 9: eine Hardware-Implementierung nach Ausführungsvariante 1) der Erfindung;

Fig. 10: eine Hardware-Implementierung nach Ausführungsvariante 3) der Erfindung;

Fig. 11: eine Hardware-Implementierung nach Ausführungsvariante 4) der Erfindung;

Fig. 12: eine Software-Implementierung nach Ausführungsvariante 3) der Erfindung.

In Fig. 1 ist eine übliche Signalverarbeitungskette 1 für einen Strahlungssensor dargestellt, der für jedes Sensorelement in gleicher Weise vorhanden ist, falls es sich um einen Mehrelementempfänger (Zeilen- oder Matrixempfänger) handelt. Ein Sensorelement, das durch eine definierte geschlossene strahlungsempfindliche Fläche charakterisiert ist, wird im Folgenden als Detektor 11 bezeichnet. Er stellt den Anfang einer Signalverarbeitungskette 1 dar, die im weiteren einen Integrator 12, einen Verstärker 13 und einen Analog-Digital-Wandler (ADC) 14 aufweist.

Durch den auftreffenden Fluss elektromagnetischer Strahlung 2 wird im Detektor 11 ein analoges elektrisches Signal erzeugt, dass im Integrator 12 aufsummiert und im Verstärker 13 verstärkt wird, um schließlich im ADC 14 in ein digitales Ausgangssignal 21 gewandelt zu werden.

Jedes dieser Bauelemente der Signalverarbeitungskette 1 weist eine bestimmte Sättigungsgrenze 24 des Signalpegels auf, ab dem der streng monotone Signalverlauf in eine Sättigung übergeht. Ab dieser Sättigungsgrenze 22 ist das Signal nicht mehr auswertbar. Das Bauelement mit der niedrigsten Sättigungsgrenze 24 des nutzbaren Signalpegels definiert also den erfassbaren Dynamikbereich 25 bzw. 26 der Signalverarbeitungskette 1 für die einfallende Strahlung 2.

Da dem Signal am Eingang des ADC 14 ist ein Rauschanteil überlagert ist, der durch interne elektronische Rauschprozesse 22 aller vorgeschalteten Bauelemente der Signalverarbeitungskette 1 sowie durch externes Rauschen 23 (äußere Störsignale) verursacht wird, muss - damit das tatsächliche Nutzsignal als Messsignal erfasst wird - ein Signal-zu-Rausch-Verhältnis (SNR) überschritten werden, das wie folgt definiert ist:

$$SNR = \frac{Nutzsignal}{Rauschanteil} = \frac{Gesamtsignal - Rauschanteil}{Rauschanteil}$$

Ausgehend vom Anwendungsfall ist deshalb in der Signalverarbeitungskette 1 ein Bereich des Signalpegels - Dynamikbereich 25 - zu definieren, den das Instrument auswerten können muss. Weiterhin wird durch die Anwendung innerhalb dieses Dynamikbereichs 25 üblicherweise eine Mindestanforderung an den zu detektierenden kleinsten Signalpegel 27, ausgedrückt als Schwellwert 28 des SNR, ein so genanntes $SNR_{MIN}$ definiert. Diese Zusammenhänge sind in Fig. 2 dargestellt.

Zur Steuerung des finalen Signalpegels (Ausgangssignal 21 des ADC 14) und damit des SNR können innerhalb der Signalverarbeitungskette 1 außer dem (meist über Integrator 12 und Verstärker 13 eingestellten) Verstärkungsfaktor (Gain) alternativ auch andere Größen verändert werden.
Ein strahlungsproportionales Ausgangssignal 21 kann ebenso eingestellt werden durch:

- spektrale Filter mit unterschiedlicher Transmission, wobei die Filter dabei in den Strahlengang vor die Detektoren 11 eingefügt oder alternativ oder auch zusätzlich direkt auf die Detektoren 11 aufgebracht werden;
- die Empfindlichkeit der einzelnen Detektoren 11 (Einstellung oder Steuerung der Signalpegel einzelner Sensorelemente eines Arrays);
- die Variation der Integrationszeit (z.B. am Integrator 12); oder
- die Größe der aktiven (strahlungsempfindlichen) Fläche der Detektoren 11, wobei die aktive Fläche der Detektoren 11 durch die einmalig vorgewählte Kantenlänge (z.B. in Scanrichtung des Instrumentes verkleinert) oder - alternativ oder zusätzlich - durch teilweise Abschattung/Abdeckung der maximal hardwaremäßig verfügbaren aktiven Fläche variiert werden kann.

Im Folgenden werden die oben genannten, den Ausgangssignalpegel 21 beeinflussenden Messparameter (Filtertransmission, Detektorempfindlichkeit, aktive Detektorfläche, Integrationszeit, Verstärkungsfaktor) unter dem Begriff Signalkettenparameter zusammengefasst.
Die Verwendung von Detektoren 11 (auch in Form einzelner Sensorelemente eines Arrays) mit unterschiedlicher Empfindlichkeit, verschiedenen Filtern sowie unterschiedlich großen aktiven Flächen hat in der Regel statischen Charakter. Das heißt, diese Größen sind während des Betriebes nicht oder nur schwer veränderbar.
Dagegen können die den einzelnen Detektoren 11 zugeordneten elektronischen Größen, Integrationszeit und Verstärkungsfaktor, d.h. die dynamisch variablen Parameter in der zugehörigen Signalverarbeitungskette 1, grundsätzlich auch während des Betriebes noch frei eingestellt werden.
Grundlage der Erfindung sind zwei oder mehrere Detektoren 11, die in zeitlicher Abfolge nacheinander ein Zielobjekt 3 erfassen. Mögliche Veränderungen des beobachteten Zielobjektes 3 seien während dieses Zeitraumes vergleichsweise klein und vernachlässigbar. Die Detektoren 11 können sowohl in Reihen/Zeilen oder Matrizen angeordnet sein.

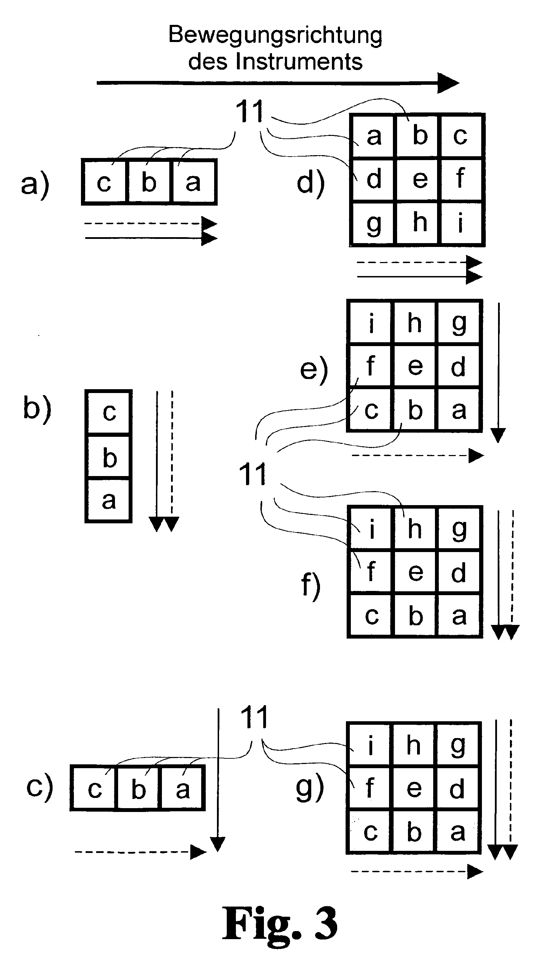

Fig. 3 zeigt Beispiele möglicher Anordnungen von Detektoren 11 eines (nicht näher dargestellten) strahlungsmessenden Instruments für Luft- und Raumfahrt, das beliebige Strahlung, vorzugsweise optische oder Radarstrahlung, aufnehmen kann. Neben der Bewegungsrichtung des Instruments sind die jeweilige Scanrichtung (durchgezogener Pfeil) und die jeweilige TDI-Richtung (gestrichelter Pfeil) abgebildet. Sind die Detektoren 11 in Matrizen angeordnet, kann grundsätzlich auch ein zweidimensionales TDI-Verfahren erfolgen.
Des Weiteren müssen die Detektoren 11 nicht zwingend lückenlos, wie in Fig. 3 dargestellt, positioniert sein. Vielmehr wird in der Praxis ein technologisch oder systembedingter Abstand zwischen den einzelnen Detektoren 11 vorhanden sein. Dies ist zulässig, so lange - bezogen auf die jeweilige Anwendung - die Veränderungen des zu beobachtenden Zielobjekts 3 langsam ablaufen gegenüber der Gesamtdauer der Mehrfachabtastung durch die einzelnen Detektoren 11 bleiben. Im Extremfall kann diese Voraussetzung auch noch bei einer Verknüpfung von Detektoren 11 verschiedener Instrumente, die ihrerseits dasselbe Zielobjekt 3 zeitlich gestaffelt beobachten, erfüllt sein.
Die Parameter der den Detektoren 11 zugeordneten Signalverarbeitungsketten 1 sind bei allen nachfolgenden Ausführungen der Erfindung innerhalb der beschriebenen Reihen, Linien oder Matrizen von Detektoren 11 nicht konstant, d.h. es gibt mindestens einen Detektor 11a, der sich von den anderen in mindestens einem Signalkettenparameter unterscheidet.

1) In einer ersten Ausführung der Erfindung wird mit Detektoren 11a, 11b (und ggf. weitere) zu unterschiedlichen aufeinanderfolgenden Zeiten das gleiche Zielobjekt 3 beobachtet. Diese Detektoren 11a, 11b usw. haben unterschiedliche Signalkettenparameter. Jede den Detektoren 11a, 11b ff. zugehörige Signalverarbeitungskette 1 liefert ein Ausgangssignal 21. Für die Auswertung des Messsignals wird das Ausgangssignal 21 desjenigen Detektors 11a, 11b ff. verwendet, dessen Signalkettenparameterkombination das größte Messsignal liefert und das gerade noch nicht in Sättigung ist, d.h. dessen Signalpegel unterhalb der Sättigungsgrenze 24 seines Dynamikbereichs 25 bzw. 26 liegt. Damit wird unter Ausnutzung eines eingeschränkten Dynamikbereiches 26 bestimmter Detektoren 11 das erreichbare SNR für kleine Signalpegel verbessert, ohne dass das Risiko besteht, plötzliche hohe Signalpegel nicht mehr messen zu können.

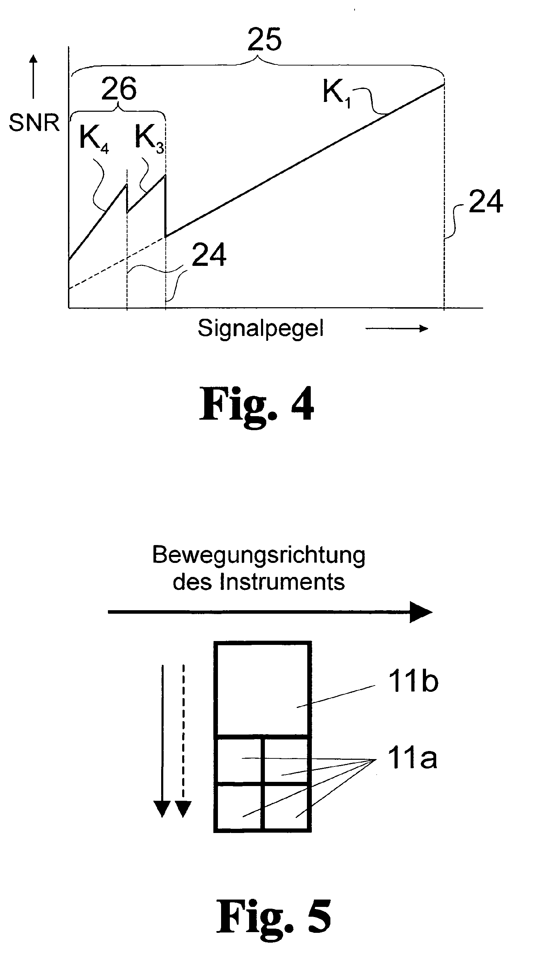

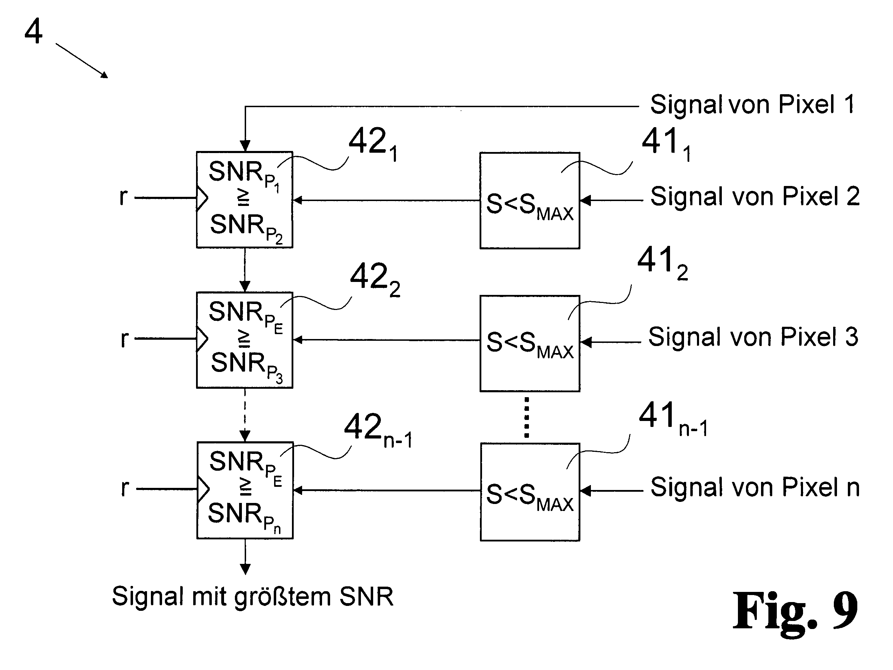

Das Prinzip des Verfahrens ist in einer Hardware-Implementierung in Fig. 9 dargestellt. Die Detektoren 11 werden hierbei als Pixel 1 bis n eines Sensorarrays angenommen, von denen mindestens Pixel 1 einen Dynamikbereich 25 entsprechend Fig. 4 für einen maximal zu erfassenden Signalpegel $S_{MAX}$ aufweist. Für alle nachfolgenden Pixel 2 bis n sind abgestuft eingeschränkte Dynamikbereiche 26 (z.B. gemäß SNR-Kurven $K_3$ und $K_4$ in Fig. 4) angenommen, so dass für deren Signale in Sättigungskomparatoren $41_1$ bis $41_{n-1}$ geprüft wird, ob eine Sättigung (Überschreitung der Sättigungsgrenze 24) vorliegt. Liegt letztere vor wird das Signal nicht an die jeweiligen SNR-Komparatoren $42_1$ bis $42_{n-1}$ weitergeleitet, die jeweils vergleichen, ob ein von einem vorhergehenden Detektor 11 (Pixel mit niedrigerer Pixelnummer) vorliegender Signalpegel überschritten wird. Dazu sind die SNR-Komparatoren $42_1$ bis $42_{n-1}$ in einer Pipeline-Struktur angeordnet, die in ihrer Ablaufgeschwindigkeit (Verarbeitungstakt) exakt der Bewegung der einzelnen weitergeleiteten Signale der zugeordneten Detektoren 11 über ein und demselben Zielobjekt 3 anpasst sein muss. Diese Randbedingung ist in Fig. 9 als zugeführter Pixeltakt r des Sensorarrays, auf dem die Detektoren 11 integriert sind, eingezeichnet. Im Ergebnis wird das Signal des Detektors 11 ausgegeben, der das größte SNR erzielt hat (ohne seine Sättigungsgrenze 24 zu überschreiten).

Im Unterschied zu Punkt 1 des Standes der Technik muss bei dieser Grundvariante der Erfindung die zur Verfügung stehende Integrationszeit nicht aufgeteilt werden. Somit können häufig zu messende geringe Energiemengen besser genutzt werden. Weiterhin müssen unterschiedliche Verstärkungsfaktoren nicht geschaltet werden, so dass das damit verbundene Rauschen entfällt. Im Unterschied zu Punkt 2 des Standes der Technik ist zur SNR-Verbesserung keine TDI-Berechnung nötig.

Die Signalkettenparameter der einzelnen Detektoren 11 sind grundsätzlich frei kombiniert einstellbar, um eine gewünschte Signalverstärkung im Ausgangssignal 21 des ADC 14 zu erhalten. Beispielsweise können für dieses Verfahren anstelle von Signalverarbeitungsketten 1 mit Detektoren 11 gleicher Integrationszeit und unterschiedlichen Verstärkungsfaktoren auch Signalverarbeitungsketten 1 mit gleichem Verstärkungsfaktor für Detektoren 11 mit unterschiedlicher Integrationszeit eingesetzt werden. Ebenso können die Ausgangssignale 21 auch durch unterschiedliche Empfindlichkeit der Detektoren 11 (z.B. vorgeordnete Filter oder Blenden) eingestellt werden.

2) In einer zweiten Ausführung der Erfindung wird der maximale Signalpegel mit Hilfe eines oder mehrerer Detektoren 11 (i.d.R. des ersten oder der ersten Sensorelemente eines Sensorarrays) der oben beschriebenen Linien, Reihen oder Matrizen abgeschätzt oder ermittelt. Zu diesem Zweck werden die Signalkettenparameter dieses Detektors 11a bzw. dieser Detektoren 11a-11c so gewählt, dass der gesamte Dynamikbereich 25 abgedeckt wird. Die Signalkettenparameter der nachfolgenden Detektoren 11 werden anhand dieser Messung dynamisch so angepasst, dass das SNR für den nun eingeschränkten Dynamikbereich 26, der jedoch hinreichend bekannt ist, verbessert wird.

Wegen der eventuell sehr ungenauen Messung/Abschätzung des aktuell benötigten eingeschränkten Dynamikbereiches 26 mit dem den gesamten Dynamikbereich 25 abdeckenden Detektor 11a ist die Verwendung eines oder auch mehrerer nachgeordneter Detektoren 11 sinnvoll. Wird nur ein nachgeschalteter Detektor 11b verwendet, so müssen dessen Signalkettenparameter so eingestellt werden, dass der abgeschätzte Signalbereich (eingeschränkter Dynamikbereich 26) mit Sicherheit nicht die durch die Signalkettenparameter eingestellte Sättigungsgrenze 24 überschreitet.

Werden mehrere nachgeschaltete Detektoren 11 verwendet, so können deren Signalkettenparameter so angepasst werden, dass der Unschärfebereich der Abschätzung des zu erwartenden Signalpegels abgedeckt wird. In diesem Fall erfolgt die Auswertung der nachgeordneten Detektoren 11 gemäß obiger Ausführung 1).

Im Unterschied zu Punkt 1 des Standes der Technik braucht auch hier die zur Verfügung stehende Integrationszeit nicht aufgeteilt zu werden. Somit kann eine einfallende (niedrige) Energiemenge besser genutzt werden.

Im Unterschied zu Punkt 2 des Standes der Technik findet eine deutliche SNR-Verbesserung ohne TDI-Berechnung statt.

3) Eine dritte Ausführung der Erfindung basiert auf den in Fig.3 gezeigten Sensorarrays in Form von Reihen/Zeilen oder Matrizen, in denen die Sensorelemente die einzelnen Detektoren 11a, 11b, 11c usw. bilden und unterschiedliche fest eingestellte Signalkettenparameter aufweisen. Die Signalkettenparameter können dabei für jeden einzelnen Detektor 11a, 11b, 11c, ... unterschiedlich sein oder aber es existieren Gruppen von Detektoren 11 (z.B. 11a-11c, 11d-11f usw.) mit in sich gleichen Signalkettenparameter, wobei sich die Gruppen untereinander jedoch in mindestens einem Signalkettenparameter unterscheiden.

Unter Verwendung der Messwerte aller nicht gesättigten Detektoren 11 wird zusätzlich eine Messwertberechnung nach dem bekannten TDI-Verfahren vorgenommen. Dabei wird jedoch in Gegenüberstellung zum Punkt 2 des Standes der Technik das SNR im niedrigen Signalbereich deutlich erhöht, ohne im Falle eines großen Dynamikbereichs 25 bei der Wahl der Signalkettenparameter eingeschränkt zu sein. Die Rauschminderung der Messergebnisse wird allein dadurch erreicht, dass ausschließlich alle von dem zu messenden Signalpegel nicht gesättigten Detektoren 11 zur Messwertermittlung beitragen.

Eventuell gesättigte Detektoren 11 werden nicht berücksichtigt. Damit wird das SNR bei hohen Signalpegeln weniger stark verbessert als dies mit klassischem TDI der Fall wäre. Im unteren und mittleren eingeschränkten Dynamikbereich 26 ist hingegen eine Verbesserung gegeben, die über die Werte der klassischen TDI-Verfahren weit hinausgeht.

Hierbei ist die Mittelung über Detektoren 11 mit unterschiedlichen Signalkettenparametern der Signalverarbeitungskette 1 unter zusätzlicher Verwendung von Gewichtsmatrizen möglich.

Beispiel:

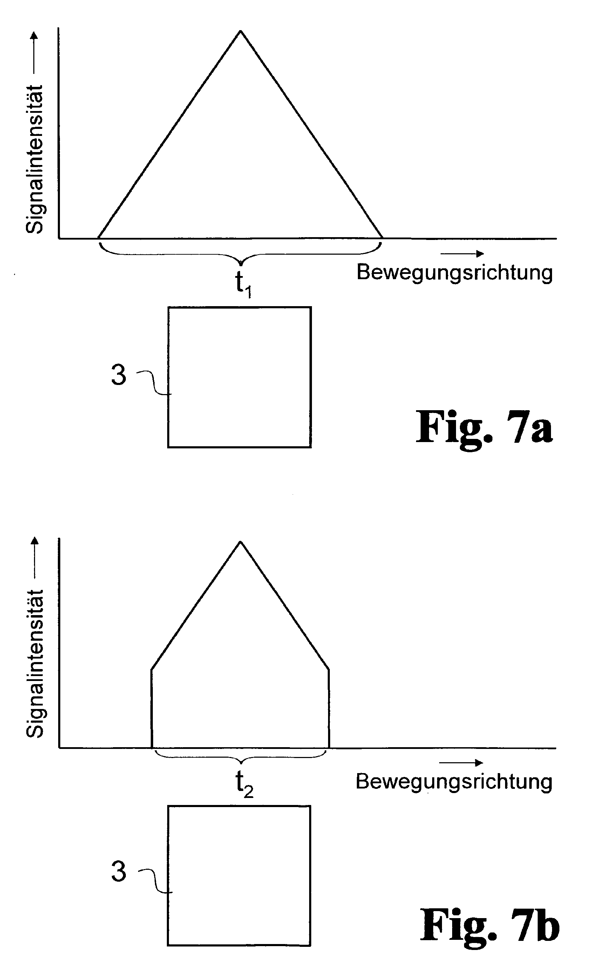

Das Gesamtsignal eines Zielobjektes 3 (nur in Fig. 7 gezeigt) kann mit Hilfe von n Detektoren 11 aus deren bekannten Verstärkungsfaktoren $G_1 ... G_n$ und den Signalpegeln $S_1 ... S_n$ (Ausgangssignale 21 am Ausgang des ADC 14) mit folgendem Verfahren berechnet werden:

- Setze die Anzahl der Detektoren 11 als einen rückwärts laufenden Zählindex m = n;

- Vergleiche das Signal $S_i$ (i = 1 ... n) der Signalverarbeitungskette 1 jedes Detektors 11 mit deren Sättigungsgrenze 24 ($S_{MAX}$),

- Wenn $S_i = S_{MAX}$, setze die Signale $S_i$ aller gesättigten Detektoren 11 auf Null und reduziere den Zählindex m um die Anzahl der zu Null gesetzten Signale $S_i$;

- Bilde das Summensignal $S_{SUM}$ der verbliebenen Signale $S_i$

$$S_{SUM} = \frac{\sum_{i=1}^{n}\left[\frac{1}{G_i} S_i\right]}{m}$$

Da sich das (unkorrelierte) Rauschen aus der Wurzel der Summe der Quadrate der Einzelmessungen ergibt, erhöht sich das SNR entsprechend.

Damit muss nur noch die Parameterkombination der Signalverarbeitungskette 1 einer TDI-Stufe (einer TDI-Zeile), mindestens jedoch die eines Detektors 11, den gesamten Dynamikbereich 24 abdecken. Alle anderen Detektoren 11 können das SNR im Bereich niedrigen Signalpegels vergrößern, so dass im gesamten interessierenden Signalbereich ein gefordertes Mindest-SNR (SNR-Schwelle 28) erreicht werden kann. Weisen die Detektoren 11b, 11c mit eingeschränktem Dynamikbereich 26 zueinander unterschiedliche Signalkettenparameter auf, so erfolgt die Verbesserung des SNR über dem Signalpegel im unteren und mittleren Teil des gesamten Dynamikbereichs 25 abgestuft in Intervallen. Eine solche Ausbildung der Erfindung ist im Ausführungsbeispiel 1 wiedergegeben. Im Unterschied zu Punkt 1 des Standes der Technik wird hierbei die zur Verfügung stehende Integrationszeit nicht aufgeteilt und somit die einfallende Energiemenge besser genutzt. Im Unterschied zu Punkt 2 des Standes der Technik findet die TDI-Berechnung basierend auf unterschiedlichen Signalkettenparametern statt.

4) In einer vierten Ausführung der Erfindung wird der maximale Signalpegel wiederum mit Hilfe eines oder mehrerer Detektoren 11 (i.d.R. des ersten oder der ersten Sensorelemente der oben beschriebenen Linien/Reihen oder Matrizen) abgeschätzt bzw. ermittelt. Zu diesem Zweck werden die Signalkettenparameter dieses Detektors 11a oder dieser Detektoren 11a-11c so gewählt, dass der gesamte Dynamikbereich 25 abgedeckt wird. Die Signalkettenparameter der nachfolgenden Detektoren 11b, 11c bzw. 11d ff. werden anhand dieser Messung dynamisch so angepasst, dass das SNR für den nun eingeschränkten jedoch hinreichend bekannten Dynamikbereich 26 optimiert verbessert wird.

Im Unterschied zur zweiten Ausführung der Erfindung findet hier eine TDI-Berechnung statt.

Damit tragen alle nicht gesättigten Detektoren 11 - dies sind hier aufgrund der dynamischen Anpassung i.d.R. alle Detektoren 11 außer dem/n ausgewählten ersten für den gesamten Dynamikbereich 25 - zur Generierung des Summensignals und zur Rauschminderung bei. Die Signalkettenparameter können dabei für jeden einzelnen der folgenden Detektoren 11b ff. unterschiedlich sein oder aber es existieren Gruppen von Detektoren 11a-c, 11d-f, 11g-i usw. mit in sich gleichen Signalkettenparametern, wobei sich die Gruppen untereinander jedoch in mindestens einem Signalkettenparameter unterscheiden. Ebenso können zur Festlegung der Signalkettenparameter mehrere Detektoren 11 mit in sich gleichen oder auch unterschiedlichen Signalkettenparametern herangezogen werden. Werden mehrere Detektoren 11a-11c als Basis für die Festlegung der Signalkettenparameter der nachfolgenden Detektoren 11d ff. herangezogen, so ist auch hier die Möglichkeit einer TDI-Berechnung gegeben, um u.a. die Güte der Abschätzung des zu erwartenden Signalpegels zu erhöhen.

Dies soll mit Hilfe von Fig. 4 verdeutlicht werden. Bei dem dort dargestellten Beispiel wurden drei TDI-Stufen benutzt. Mit der ersten TDI-Stufe mit niedrigem Verstärkungsfaktor, die der Kurve $K_1$ entspricht, wurde eine Messung durchgeführt, die den gesamten abzudeckenden Dynamikbereich 25 für die zwei nachfolgenden Messungen der folgenden TDI-Stufen soweit einschränken konnte, dass für den dann abgeschätzt eingeschränkten Dynamikbereich 26 optimale Verstärkungsfaktoreinstellungen vorgenommen werden konnten. Im Ergebnis wird das SNR über den gesamten Dynamikbereich 25, besonders jedoch im unteren und mittleren Bereich der Kurven $K_3$ und $K_4$, optimiert. In der praktischen Umsetzung kann es durchaus sinnvoll sein, mehr als einen Detektor 11 mit niedrigem Verstärkungsfaktor einzusetzen. Dadurch gewinnt man die entsprechende Zeit, um die Einstellungen der Verstärkungsfaktoren für die nachfolgenden Detektorstufen (mit den SNR-Kurven $K_3$ und $K_4$) durchzuführen.

5) In einer fünften Variante der Erfindung sollen die Mischformen der bisher beschriebenen Ausprägungen behandelt werden.

So ist es möglich, nur für einen Teil der Detektoren 11 die Signalkettenparameter dynamisch nach den Ausführungen 2) oder 4) zu variieren, und für den anderen Teil die Signalkettenparameter statisch nach Ausführung 1) oder 3) vorzubestimmen. Weiterhin ist es möglich, nur einen Teil der Detektoren 11, vorzugsweise den Detektoren 11 mit eingeschränktem Dynamikbereich 26, für eine TDI-Berechnung nach Ausführung 3) oder 4) zu verwenden und den anderen Teil, vorzugsweise für hohe Signalstärken bzw. für die Hilfsmessung zum Einstellen der entsprechenden Signalkettenparameter der vorgenannten Detektoren 11, im Sinne von Ausführung 1) oder 2) zu betreiben.

6) Eine sechste Ausführungsvariante der Erfindung betrifft die Möglichkeit, Detektoren 11 unterschiedlicher Größe z.B. mit einem Detektor 11a mit viermal so großer Fläche wie die weiteren Detektoren 11b im Sinne der Ausführungen 1) bis 5) auszuwerten.

Beispiel:

Ein Instrument sei zur Erfassung von Oberflächentemperaturen von Gebieten auf Planeten auszulegen. Es sollen sowohl Oberflächentemperaturen von Wasser- als auch von Landflächen erfasst werden. Über Landflächen muss die Möglichkeit eingeplant werden, sowohl Feuer zu beobachten als auch die Bodentemperatur zu ermitteln. Der abzudeckende Dynamikbereich 25 ist hier sehr groß, da die von den Oberflächenbereichen in Form elektromagnetischer Wellen abgestrahlten Energie (abhängig vom betrachteten Spektralbereich) zwischen kalten Meeresoberflächen und aktiven Brandherden um mehr als drei Größenordnungen variieren kann. Gleichzeitig haben die hier herangezogenen Anwendungen unterschiedliche Anforderungen an die örtliche Auflösung. Während über Meeresflächen i.d.R. räumlich grob aufgelöste Daten durchaus ausreichen können, erfordert die Brandbekämpfung i.d.R. räumlich höher aufgelöste Bilddaten. Diese Anforderungen können beispielsweise mit der in Fig. 5 gezeigten Anordnung von Detektoren 11a und 11b abgedeckt werden. In Fig. 5 sind analog zu Fig. 3 die Bewegungsrichtung des Instrumentes, die Scanrichtung und die TDI-Richtung eingetragen. Dabei sind die kleineren Detektoren 11a zur Abbildung von Bränden verwendbar, während das größere Detektorelement 11b zur Beobachtung von Meeresflächen eingesetzt wird. Trotz der Größenunterschiede der einzelnen Detektorelemente kann eine Verknüpfung der Detektoren 11a und 11b nach Ausführung 1) bis 5) sinnvoll sein.

Beispielsweise kann mit Hilfe der Detektoren 11a die Signalkettenparameter des Detektors 11b eingestellt werden und/oder alle Detektoren 11a und 11b tragen im Sinne der Ausführung 3) zu einer gemeinsamen TDI-Berechnung bei.

Die Ausführung 6) kann zusätzlich noch mit den folgenden Ausführungen 7) und 8) frei kombiniert werden.

7). Eine siebte Ausführung der Erfindung beschreibt die Möglichkeit, Anordnungen von Detektoren 11 zu betreiben und im Sinne der Ausführungen 1) bis 5) auszuwerten, bei denen die Detektoren 11a und 11b um Bruchteile des Pixelabstandes (vorzugsweise ½ Pixelabstand) versetzt zueinander ausgelesen werden und dadurch nachträglich eine Erhöhung der Auflösung im abgeleiteten Bild erreicht wird.

Beispiel:

Ein bildgebendes Instrument erfordere eine hohe räumliche Auflösung der resultierenden Bilddaten. Gleichzeitig sei der zu erwartende Dynamikbereich groß, aber es können auch sehr kleine Signalpegel auftreten. Aus radiometrischen oder technologischen Gründen sei eine Verkleinerung der Detektorflächen nicht möglich.

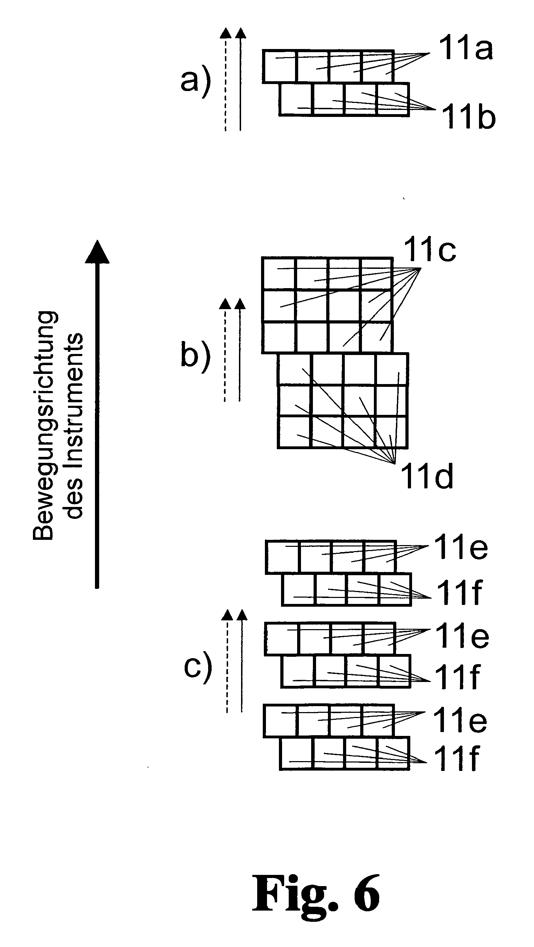

In diesem Fall besteht gemäß Fig. 6 (in Kombination mit bekannten Subpixelabtastverfahren des Standes der Technik) die Möglichkeit, zwei Reihen von Detektoren 11a und 11b versetzt zueinander auszulesen.

In Fig. 6 sind analog zu Fig.3 die Bewegungsrichtung des Instrumentes, die Scanrichtung (durchgezogene Pfeile) und mögliche TDI-Richtungen (gestrichelte Pfeile) aufgetragen. Mit Hilfe der Daten dieser beiden Detektorreihen 11a und 11b werden im Ergebnis Bilddaten erzeugt, die eine etwas höhere räumliche Auflösung aufweisen, als sie durch die einzelnen Detektoren 11 gegeben wäre.

Werden diese versetzten Reihen von Detektoren wiederholt ausgeführt, so lassen sich deren Detektoren 11c und 11d im Sinne der Ausprägungen 1) bis 5) auszuwerten. Des Weiteren gewinnt man mit den Detektoren 11c bereits eine hinreichend genaue Abschätzung der zu erwartenden Signalpegel der Detektoren 11d. Damit lassen sich die Detektoren 11c und 11d untereinander im Sinne der Ausprägungen 1) bis 5) auswerten.

Werden versetzte einzelne Reihen von Detektoren 11e und 11f wiederholt ausgeführt, lassen sich ebenfalls im Sinne der Ausführungen 1) bis 5) auszuwerten.

Des Weiteren gewinnt man mit den Detektoren 11e bereits eine hinreichend genaue Abschätzung der zu erwartenden Signalpegel der Detektoren 11f. Damit lassen sich die Detektoren 11e und 11f untereinander im Sinne der Ausprägungen 1) bis 5) auswerten.

Natürlich lassen sich in diesem Fall bei wiederholt ausgelesenen Zeilen der Detektoren 11a und 11b, 11c und 11d sowie 11e und 11f auch im Sinne des Punktes 2 des Standes der Technik auswerten, um mittels bekannter Verfahren zu einer Auflösungsverbesserung zu führen. Ferner sind auch die Ausführungen 6) bis 8) miteinander frei kombinierbar.

8) Eine achte Ausführung der Erfindung beschreibt die Möglichkeit, Detektoren 11 durch vorangestellte unterschiedliche spektrale Filter im Sinne der Ausprägungen 1) bis 5) auszuwerten, indem den aktiven Detektorflächen verschiedene Filter (z.B. Graufilter oder Farbfilter) entweder als fest angebracht oder (z.B. in einem Filterrad) wechselbar installiert sind.

Beispiel:

Ein optisches Instrument sei mit einer Sensormatrix (wie z.B. in Fig. 3d-3g für drei Zeilen und drei Spalten angedeutet) ausgestattet, die in diesem Fall aus vier Zeilen und n Spalten bestehen.

Vor der ersten Zeile sei ein Filter mit Transmission im Bereich zwischen 400 nm und 500 nm angebracht, vor der zweiten Zeile ein solcher mit Transmission im Bereich zwischen 500 nm und 600 nm, vor der dritten Zeile ein solcher mit Transmission im Bereich zwischen 600 nm und 700 nm und vor der vierten Zeile ein solcher mit Transmission zwischen 400 nm und 700 nm. Die Spalten repräsentieren somit die Abtastbreite. Die Reihen repräsentieren vier Spektralkanäle wobei der vierte einen panchromatischen Kanal darstellt.

Die Detektoren 11 der ersten bis vierten Zeilen können nach Ausführung 1) bis 5) sinnvoll verknüpft werden. Vorteilhaft können Detektoren 11 der ersten bis dritten Zeile im Sinne der Ausführung 3) der Erfindung mit Detektoren 11 der vierten Zeile zu einer gemeinsamen TDI-Berechnung beitragen. In diesem Fall würde dies zu einer Verbesserung des SNR für einen panchromatischen Kanal führen.

Die Ausführungen 6) bis 8) können frei miteinander kombiniert werden.

Für eine besondere Zusatzfunktion der Erfindung wird auf Fig. 7 Bezug genommen.

Wird bei bewegtem Instrument (z.B. bewegte Kamera sowohl in Bewegungsrichtung als auch in Scan-Richtung) mit den Detektoren 11 ein Zielobjekt 3 abgebildet, kommt es zu einer Verschmierung, die auch als Bewegungsunschärfe bezeichnet wird. Die Fig. 7a zeigt die Signalintensität der von einem Zielobjekt 3 stammenden und von einem Pixel (Bildpunkt, Detektor 11) detektierten Strahlung 2 während der Bewegung über das Zielobjekt 3.

Wie zu sehen ist, wird die Energie des Zielobjekts 3 durch die Bewegung über einen größeren Bereich verschmiert. Das in der Optik/Optronik gebräuchliche Maß für Verzerrungen und Verschmierungen ist die Modulationsübertragungsfunktion (MTF). Die Stärke der bewegungsbedingten Verschmierung und die Stärke der damit einhergehenden Reduzierung der MTF ist abhängig von der Größe der Integrationszeit. Eine Verkürzung der Integrationszeit führt zur Reduzierung dieser Verschmierung.

Ziel der bisher beschriebenen Ausführungen der Erfindung war die Verbesserung des SNR im jeweils relevanten Dynamikbereich 25 bzw. 26. Wird das SNR aber mehr als nötig verbessert, kann die entstandene Reserve dafür genutzt werden, die Integrationszeiten statisch oder dynamisch zu verringern und damit gezielt die MTF zu verbessern. Dies ist in Fig. 7b skizziert.

Durch eine Verkürzung der ursprünglichen Integrationszeit $t_1$ auf eine verkürzte Integrationszeit $t_2$ werden die aufintegrierten Signalpegel, in Fig. 7a und 7b veranschaulicht als die Fläche unter den jeweiligen Signalintensitätskurven, verkleinert. Es verschlechtert sich also folglich das SNR. Wie in Fig. 7b ersichtlich, nehmen andererseits im Fall der verkürzten Integrationszeit $t_2$ aber die örtlich "verschmierten" Signalanteile ab. Die MTF kann somit wie folgt verbessert werden.

Ist für den aktuellen Signalpegel ein bestimmtes Mindest-SNR definiert und liegt das erreichbare SNR deutlich über diesem, so wird das SNR durch definierte Verkürzung der Integrationszeit $t_1$ auf eine verkürzte Integrationszeit $t_2$ reduziert, wobei letztere so zu bemessen ist, dass das vorgegebene Mindest-SNR (Schellwert 28) immer noch erreicht oder überschritten wird. Dadurch wird die MTF auf Kosten des SNR gezielt verbessert.

Im Folgenden sollen noch vorteilhafte Realisierungsmöglichkeiten für das erfindungsgemäße Messverfahren beschrieben werden.

Beispiel 1:

Besonders im thermischen IR-Bereich des elektromagnetischen Spektrums können extreme Signalpegelschwankungen (z.B. bei lokalen Hitzequellen, wie Waldbränden) beobachtet werden. In der Regel soll hierfür eine Sättigung des Signals am Ausgang des Instruments vermieden werden, ohne die Instrumenteneigenschaften für niedrige Signalpegel (z.B. normale Umgebungstemperatur) zu verschlechtern.

Hier kann die oben beschriebene Erfindung günstig eingesetzt werden, indem der Verstärkungsfaktor einer TDI-Stufe (Detektorreihe) für die Feuerbeobachtung (Definition des gesamten Dynamikbereiches 25) ausgelegt ist und die anderen (nachgeschalteten) Detektoren (weiterer TDI-Stufen) für die Beobachtung von relativ kalten Flächen wie z.B. Meeresoberflächen durch eingeschränkte Dynamikbereiche 26 eingerichtet sind.

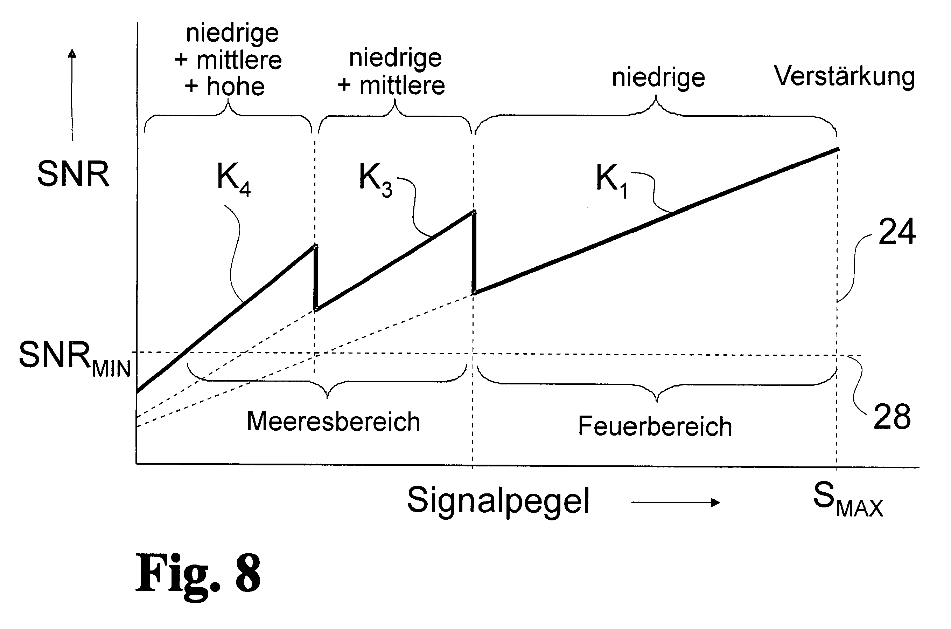

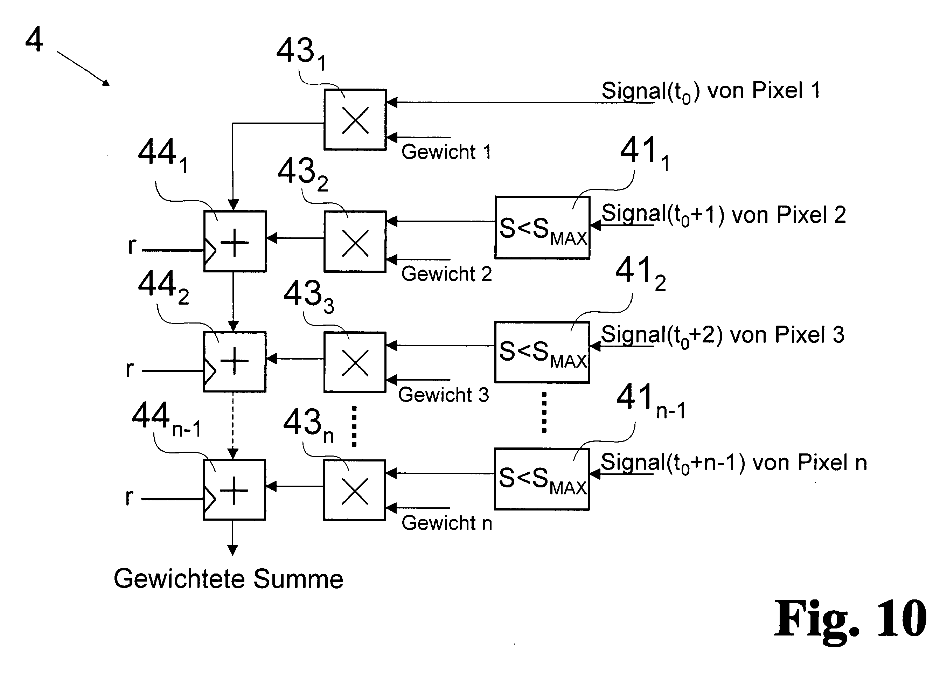

Wie in Fig. 8 zu sehen ist, wird das SNR in diesem Beispiel signifikant im unteren bis mittleren Signalpegelbereich durch Anwendung der Ausführung 3) der Erfindung verbessert, indem bei den nachgeschalteten Detektoren die Signalkettenparameter entsprechend den Kurven $K_3$ und $K_4$ eingestellt sind. Durch die Wahl geeigneter Verstärkungsfaktoren ist die SNR-Funktion in diesem Beispiel in bestimmten Grenzen frei einstellbar. Infolge der Kombination mit dem TDI-Verfahren werden in den Kurvenbereichen $K_3$ und $K_4$ unter Anwendung einer verstärkungsabhängigen Gewichtung der Signalpegel (siehe Fig. 10 als Hardware-Ausführung 3) der Erfindung) alle verfügbaren Signalanteile verknüpft. Dabei werden im Bereich $K_3$ Signale aus Detektoren 11 mit niedriger und mittlerer Verstärkung verwendet (Detektorsignale mit hoher Verstärkung werden - wegen Überscheitung der Sättigungsgrenze 24 - eliminiert) und im Bereich $K_4$ werden Signale aller Detektoren 11 einbezogen, so dass sich das SNR deutlich erhöht. Im Bereich hoher Signalpegel (Kurve $K_1$) werden nur die Signale der Detektoren 11 (ungesättigter Signalverarbeitungsketten 1) mit niedriger Verstärkung verarbeitet.

Beispiel 2:

Soll die TDI-kombinierte Messwertberechnung in Hardware erfolgen, kann das zum Beispiel in einer Messwertberechnungseinheit 4 gemäß dem in Fig. 10 dargestellten Blockschema realisiert werden. Das dargestellte Hardware-Konzept verarbeitet Ausgangssignale 21 von Signalvorverarbeitungsketten 1 der Detektoren 11 (z.B. Pixel eines Sensorarrays) gemäß der Ausführung 3) der Erfindung.

Die Signale einer Anzahl n (Laufindex i = 1...n) von Detektoren 11 werden zunächst in Sättigungskomparatoren $41_1$ bis $41_n$ daraufhin überprüft, ob sie gesättigt sind, d.h. ob sie die Sättigungsgrenze 24 ihres Dynamikbereichs 25 bzw. 26 überschreiten. Dann werden ausschließlich die nicht gesättigten Signale mittels fest eingestellter Gewichte (1...n) in den zugeordneten Multiplizierern $43_1$ bis $43_{n-1}$ multipliziert. Die Addierer $44_1$ bis $44_{n-1}$ fassen alle von einem Zielobjekt 3 stammenden (bereits gewichteten) Signale zusammen und liefern so das Endergebnis für das betrachtete Zielobjekt 3. Multiplikation und Addition können dabei entweder analog oder digital erfolgen.

Die so entstehende Pipeline muss in ihrer Ablaufgeschwindigkeit exakt der Bewegung der einzelnen zur TDI-Berechnung herangezogenen Detektoren 11 über ein und demselben Zielobjekt 3 anpasst werden. Diese Randbedingung ist in Fig. 10 als von den Detektoren 11 zugeführter Pixeltakt r eingezeichnet.

Beispiel 3:

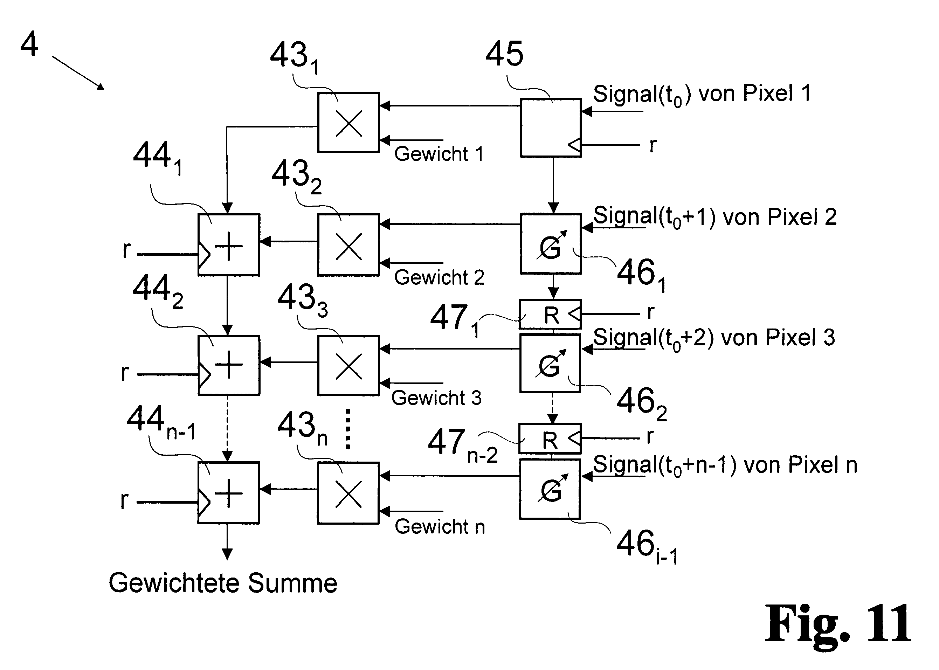

Gemäß der oben beschriebenen Ausführung 4) der Erfindung können einige Signalkettenparameter und die damit verbundenen Gewichtungen dynamisch angepasst werden. Das ist in Fig. 11 in einem skizzierten Blockschema für eine Hardware-Implementierung einer Messwertberechnungseinheit 4 realisiert.

Hierbei wurde das Ablaufschema von Fig. 10 dahingehend erweitert, dass der Signalpegel des ersten Detektors 11 (Signal von Pixel 1) mittels einer dafür vorgesehenen Schaltung 45 die Verstärker 46 der nachfolgenden Detektoren 11 (Pixel 2 bis n) steuert. Auch hier muss eine Pipelinestruktur eingeführt werden, die - wie die Summation - mit dem Pixeltakt r läuft. Dafür sind die Register 47 vorgesehen. Die gesetzte Verstärkung muss vom jeweiligen Multiplizierer 43 berücksichtigt werden. Deshalb wird die gesetzte Verstärkung dem Multiplizierer 43 als Eingangsparameter zur Verfügung gestellt.

Multiplikation und Addition können sowohl analog als auch digital erfolgen. Bei digitalen Berechnungen kann der ADC 14 der Signalvorverarbeitungskette 1 in die Verstärker 46 integriert sein.

Beispiel 4:

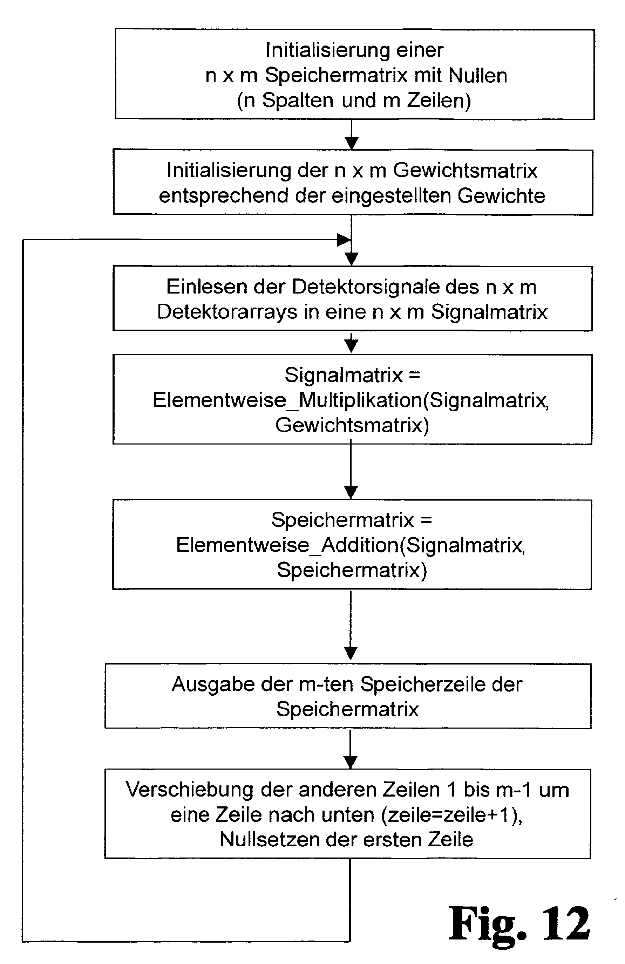

Eine mögliche softwarebasierte Implementierung der Ausführung 3) der Erfindung ist in Fig. 12 dargestellt. Das dort gezeigte Programmablaufschema startet mit der Initialisierung der benötigten Speicher- und Gewichtsmatrizen. Nach dem Einlesen der Signale aller Detektoren 11 in eine Signalmatrix werden die Elemente der Signalmatrix mit den entsprechenden Elementen der Gewichtsmatrix multipliziert und in eine gewichtete Signalmatrix gespeichert. Diese gewichtete Signalmatrix wird Element für Element zur vorhandenen Speichermatrix addiert. Schließlich wird die letzte (m-te) Zeile der Speichermatrix ausgegeben. Diese Ausgabe stellt das Ergebnis (als gewichtete TDI-Berechnung) im Sinne der Ausführung 3) der Erfindung dar.

Nach der Ausgabe der letzten Zeile der Speichermatrix werden alle anderen Zeilen der Speichermatrix um eine Zeile nach unten verschoben bzw. umgespeichert. Danach wird die erste Zeile der Speichermatrix mit Nullen initialisiert, um wieder für den nächsten Einlesevorgang zur Verfügung zu stehen und die Folgesignale in gleicher Weise zu verarbeiten.

Bezugszeichenliste

| | |
|---|---|
| 1 | Signalverarbeitungskette |
| 11 | Detektor |
| 12 | Integrator |
| 13 | Verstärker |
| 14 | Anlog-Digital-Wandler (ADC) |
| | |
| 2 | einfallende Strahlung |
| 21 | Ausgangssignal |
| 22 | externe Störung |
| 23 | internes Rauschen - Zwischensignal |
| 24 | Sättigungsgrenze (des Signalpegels) |
| 25 | gesamter Dynamikbereich |
| 26 | eingeschränkter Dynamikbereich |
| 27 | minimaler Signalpegel |
| 28 | Schwellwert (des SNR) |
| | |
| 3 | Zielobjekt |
| | |
| 4 | Messwertberechnungseinheit |
| 41 | Sättigungskomparator |
| 42 | SNR-Komparator |
| 43 | Multiplizierer |
| 44 | Addierer |
| 45 | Schaltung (zur Ermittlung des nötigen Verstärkungsfaktors) |
| 46 | Verstärkungsregler |
| 47 | Register |

$K_1, K_2$     Kurven (des SNR für verschiedene Parameterkombinationen)
$K_3, K_4$     Kurvenbereiche (des SNR für Summe mehrerer Signalkettenkombinationen)
i          Zählindex
m        Zählindex (für nicht gesättigte Detektorsignale)
n         Detektoranzahl (Pixelzahl)
r          Pixeltakt
$S_{MAX}$    maximal zu erwartender Signalpegel
$SNR_{MIN}$    notwendiges SNR
$t_1$        (ursprüngliche) Integrationszeit
$t_2$        verkürzte Integrationszeit

**Patentansprüche**

1. Verfahren zur Messung elektromagnetischer Strahlung in Instrumenten der Luft- und Raumfahrt zur Beobachtung der Erde oder anderer Himmelskörper mit mehreren Detektoren, wobei jeder Detektor mit Integrator, Verstärker und Analog-Digital-Wandler (ADC) eine Signalverarbeitungskette bildet, **dadurch gekennzeichnet, dass** Parameter der Signalverarbeitungsketten (1) der Detektoren (11) gezielt so eingestellt werden, dass mindestens ein Detektor (11a) auf einen Dynamikbereich (25) für einen maximal zu erwartenden Signalpegel ($S_{MAX}$) der elektromagnetischen Strahlung (2) eingestellt wird und mindestens ein weiterer Detektor (11b) auf einen eingeschränkten Dynamikbereich (26) für kleine und mittlere Signalpegel eingestellt wird, um in diesem eingeschränkten Dynamikbereich (26) ein höheres Signal-zu-Rausch-Verhältnis (SNR) zu erhalten.

2. Verfahren nach Anspruch 1, **dadurch gekennzeichnet, dass** für die Messung ausschließlich Messwerte von Detektoren (11a; 11b) zugelassen werden, in deren Signalverarbeitungskette (1) eine Parameterkombination eingestellt war, mit der der aktuelle Signalpegel der einfallenden Strahlung (2) unterhalb einer Sättigungsgrenze (24) des eingestellten Dynamikbereichs (25, 26) der Signalverarbeitungskette (1) aufgenommen wurde, und Detektoren (11b, 11c), in deren Signalverarbeitungskette (1) die Sättigungsgrenze (22) überschritten wurde, von der Messung ausgeschlossen werden.

3. Verfahren nach Anspruch 2, **dadurch gekennzeichnet, dass** von mehreren für die Messung zugelassenen Detektoren (11a; 11b; 11c) dasjenige Signal verwendet wird, in dessen Signalverarbeitungskette (1) eine Parameterkombination eingestellt ist, bei der das höchste SNR erzielt wurde.

4. Verfahren nach Anspruch 2, **dadurch gekennzeichnet, dass** von mehreren für die Messung zugelassenen Detektoren (11a; 11b; 11c) dasjenige ausgewählt wird, in dessen Signalverarbeitungskette (1) eine Parameterkombination eingestellt ist, bei der ein gefordertes SNR ($SNR_{MIN}$) mittels einer möglichst kurzen Integrationszeit überschritten wurde, um bei einer Objektabbildung eine verbesserte Modulationsübertragungsfunktion (MTF) zu erreichen.

5. Verfahren nach Anspruch 1, 2, 3 oder 4, **dadurch gekennzeichnet, dass** die den Detektoren (11) in den Signalverarbeitungsketten (1) zugeordneten Parameterkombinationen für die Anwendung passend gewählt, aber fest eingestellt werden.

6. Verfahren nach Anspruch 1, 2, 3 oder 4, **dadurch gekennzeichnet, dass** von den den Detektoren (11) in den Signalverarbeitungsketten (1) zugeordneten Parameterkombinationen mindestens einer der Parameter wenigstens einer Signalverarbeitungskette (1) dynamisch eingestellt wird.

7. Verfahren nach Anspruch 2, **dadurch gekennzeichnet, dass** die für die Messung zugelassenen Detektoren (11a; 11b; 11c) in einem TDI-Mode betrieben und mittels einer gewichteten Summenbildung zu einem Messsignal zusammengefasst werden, wobei die Gewichtung auf Basis der in den Signalverarbeitungsketten (1) eingestellten Parameter erfolgt.

8. Verfahren nach Anspruch 7, **dadurch gekennzeichnet, dass** die den Detektoren (11) in den Signalverarbeitungsketten (1) zugeordneten Parameterkombinationen für die Anwendung wählbar, aber fest eingestellt werden.

9. Verfahren nach Anspruch 7, **dadurch gekennzeichnet, dass** von den den Detektoren (11) in den Signalverarbeitungsketten (1) zugeordneten Parameterkombinationen mindestens einer der Parameter wenigstens einer Signalverarbeitungskette (1) dynamisch eingestellt wird.

10. Verfahren nach Anspruch 2, **dadurch gekennzeichnet, dass** einzelne Detektoren (11a) mit fest eingestellten Parametern der Signalverarbeitungsketten (1) und andere Detektoren (11b; 11c) mit dynamisch eingestellten Parametern betrieben werden.

11. Verfahren nach Anspruch 2, **dadurch gekennzeichnet, dass** mindestens einer der Detektoren (11a) sich in seinen Abmessungen seiner aktiven Fläche von den restlichen Detektoren (11b; 11c) unterscheidet.

12. Verfahren nach Anspruch 2 oder 7, **dadurch gekennzeichnet, dass** die Detektoren (11) in einem Subpixelabtastregime betrieben werden, wobei durch Verschiebungen um Bruchteile des mittleren Pixelabstandes eine Auflösungserhöhung erreicht wird.

**13.** Verfahren nach Anspruch 1, 2 oder 7, **dadurch gekennzeichnet, dass** unterschiedlichen Detektoren (11a; 11b; 11c) verschiedene Filterelemente vorgeschaltet werden.

**14.** Verfahren nach Anspruch 7, **dadurch gekennzeichnet, dass** die gewichtete Summenbildung implementiert in analoger Hardware ausgeführt wird.

**15.** Verfahren nach Anspruch 7, **dadurch gekennzeichnet, dass** die gewichtete Summenbildung implementiert in digitaler Hardware ausgeführt wird.

**16.** Verfahren nach Anspruch 7, **dadurch gekennzeichnet, dass** die gewichtete Summenbildung implementiert in Software ausgeführt wird.

**17.** Verfahren nach Anspruch 3, **dadurch gekennzeichnet, dass** bei einem nicht benötigten hohen SNR oberhalb der SNR-Schwelle (28) in der zugehörigen Signalverarbeitungskette (1) die ursprüngliche Integrationszeit ($t_1$) zu einer verkürzten Integrationszeit ($t_2$), für die das SNR noch oberhalb der SNR-Schwelle (28) liegt, verringert wird, um **dadurch** bei der Auslesung des nächsten zugehörigen Detektors (11) eine Steigerung der MTF der Objektabbildung zu erreichen.

23

2    11    12    13    14    21

Detektor-element    Int    Amp    ADC

22

1

# Fig. 1

25

26    24

SNR

$K_2$    $K_1$

$SNR_{MIN}$

28

27    $S_{MAX}$

Signalpegel

# Fig. 2

Bewegungsrichtung
des Instruments

11

a) | c | b | a |

b)
| c |
| b |
| a |

c) | c | b | a |

d)
| a | b | c |
| d | e | f |
| g | h | i |

e)
| i | h | g |
| f | e | d |
| c | b | a |

11

f)
| i | h | g |
| f | e | d |
| c | b | a |

11

g)
| i | h | g |
| f | e | d |
| c | b | a |

# Fig. 3

**Fig. 4**

Bewegungsrichtung
des Instruments

**Fig. 5**

a)

11a

11b

Bewegungsrichtung
des Instruments

b)

11c

11d

c)

11e

11f

11e

11f

11e

11f

# Fig. 6

**Fig. 7a**

**Fig. 7b**

Fig. 8

EP 1 928 167 A1

Fig. 9

Fig. 10

Fig. 11

Initialisierung einer
n x m Speichermatrix mit Nullen
(n Spalten und m Zeilen)

Initialisierung der n x m Gewichtsmatrix
entsprechend der eingestellten Gewichte

Einlesen der Detektorsignale des n x m
Detektorarrays in eine n x m Signalmatrix

Signalmatrix =
Elementweise_Multiplikation(Signalmatrix,
Gewichtsmatrix)

Speichermatrix =
Elementweise_Addition(Signalmatrix,
Speichermatrix)

Ausgabe der m-ten Speicherzeile der
Speichermatrix

Verschiebung der anderen Zeilen 1 bis m-1 um
eine Zeile nach unten (zeile=zeile+1),
Nullsetzen der ersten Zeile

# Fig. 12

**Europäisches Patentamt**

## EUROPÄISCHER RECHERCHENBERICHT

Nummer der Anmeldung

EP 07 02 3117

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2001/007473 A1 (CHUANG CHARLES [TW] ET AL) 12. Juli 2001 (2001-07-12) * Absatz [0039] - Absatz [0046] * * Abbildungen 4,5 * ----- | 1-17 | INV. H04N5/235 G01J1/16 G01J1/42 G01J1/44 |
| X | DE 103 07 744 A1 (ZEISS CARL JENA GMBH [DE]) 2. September 2004 (2004-09-02) * Absatz [0034] - Absatz [0039] * * Abbildung 1 * ----- | 1 | |
| X | US 2006/007498 A1 (MCDERMOTT BRUCE C [US]) 12. Januar 2006 (2006-01-12) * Absatz [0004] - Absatz [0024] * * Abbildung 4 * ----- | 1,11,13 | |
| X | NAYAR S K ET AL: "High Dynamic Range Imaging: Spatially Varying Pixel Exposures" PROCEEDINGS 2000 IEEE CONFERENCE ON COMPUTER VISION AND PATTERN RECOGNITION. CVPR 2000. HILTON HEAD ISLAND, SC, JUNE 13-15, 2000, PROCEEDINGS OF THE IEEE COMPUTER CONFERENCE ON COMPUTER VISION AND PATTERN RECOGNITION, LOS ALAMITOS, CA : IEEE COMP. SO, Bd. VOL. 1 OF 2, 13. Juni 2000 (2000-06-13), Seiten 472-479, XP002236923 ISBN: 0-7803-6527-5 * Seite 473 - Seite 474 * * Abbildungen 1,3 * ----- | 1,7, 13-16 | RECHERCHIERTE SACHGEBIETE (IPC) H04N G01J |
| A | WO 2004/036160 A (INST PHYSIKALISCHE HOCHTECH EV [DE]; ANALYTIK JENA AG ANALYSENMESSG [D) 29. April 2004 (2004-04-29) * Zusammenfassung * ----- | 12 | |

Der vorliegende Recherchenbericht wurde für alle Patentansprüche erstellt

| Recherchenort | Abschlußdatum der Recherche | Prüfer |
|---|---|---|
| München | 29. Februar 2008 | Haller, Mirjam |

EPO FORM 1503 03.82 (P04C03)

**EP 1 928 167 A1**

## ANHANG ZUM EUROPÄISCHEN RECHERCHENBERICHT
## ÜBER DIE EUROPÄISCHE PATENTANMELDUNG NR.

EP 07 02 3117

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-02-2008

| Im Recherchenbericht angeführtes Patentdokument | | Datum der Veröffentlichung | Mitglied(er) der Patentfamilie | | | Datum der Veröffentlichung |
|---|---|---|---|---|---|---|
| US 2001007473 | A1 | 12-07-2001 | JP | 2001218080 | A | 10-08-2001 |
| | | | TW | 490974 | B | 11-06-2002 |
| DE 10307744 | A1 | 02-09-2004 | KEINE | | | |
| US 2006007498 | A1 | 12-01-2006 | CN | 1981518 | A | 13-06-2007 |
| | | | EP | 1763951 | A1 | 21-03-2007 |
| | | | WO | 2006016945 | A1 | 16-02-2006 |
| WO 2004036160 | A | 29-04-2004 | DE | 10247742 | A1 | 22-04-2004 |
| | | | EP | 1549921 | A1 | 06-07-2005 |

EPO FORM P0461

Für nähere Einzelheiten zu diesem Anhang : siehe Amtsblatt des Europäischen Patentamts, Nr.12/82

25

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- Serial Scan with Time Delay and Integration. **E.L. DERENIAK ; G.D. BOREMAN.** Infrared Detector Systems. John Wiley & Sons, 1996, 491-493